# EUROPEAN PATENT APPLICATION

(11) **EP 0 793 041 A1**
(43) Date of publication of application: **03.09.1997**
(21) Application number: 97101082.2
(22) Date of filing: 24.01.1997
(51) Int. Cl.: F16J 15/02, F16L 21/035

(54) **A sealing device**

(30) Priority: 01.03.1996 SE 9600815
(71) Applicant: Forsheda AB, S-330 12 Forsheda (SE)
(72) Inventor: Forsberg, Sören, 331 42 Värnamo (SV); Nilsson, Ulf, 331 50 Värnamo (SV)
(74) Representative: Linde, Leif

(57) **Abstract**

A sealing device for sealing a space between two sealing surfaces (18, 20) comprises a sealing body (4) which is adapted to be compressed in the space while being forced against the sealing surfaces. At least one of the sealing surfaces is constituted by a rough surface having pores, holes and cavities, for example a concrete surface. The sealing body comprises a soft material (10, 12) which is adapted subsequently to the compression of the sealing device in the space to engage and to be forced against the rough surface by the elastomeric material while filling out the pores, holes and cavities of the surface. The soft material can be constituted by for example unvulcanized rubber.

## Description

The present invention relates to a sealing device for sealing a space between two sealing surfaces.

It is previously known to seal a space between two sealing surfaces by means of a sealing device comprising an elastomeric material, for example vulcanized rubber, comprising a sealing body which is adapted to be forced against the sealing surfaces by being compressed in the space. Thereby, the sealing device can be used for example for sealing a space between a spigot end and a socket of two pipe end portions which shall be connected with each other.

In the case that one of or each of the sealing surfaces is constituted by a rough surface having pores, holes and cavities it can be difficult in an absolutely reliable way to seal the space between the sealing surfaces by means of prior art sealing devices comprising a sealing body consisting of an elastomeric material, for example vulcanized rubber. Such problems can appear for example if the sealing surfaces consist of concrete which often presents a rough surface of the kind described. Wells and pipe conduits are often manufactured from well rings and pipes, respectively, consisting of concrete which can make it difficult to obtain tightness in the joints between the well rings or the pipes by means of sealing rings of a conventional kind.

The object of the invention is to provide a sealing device for reliable sealing of a space between two sealing surfaces, at least one of the sealing surfaces being constituted by a rough surface having pores, holes and cavities, for example a concrete surface.

In order to comply with this object the sealing device according to the invention comprises a sealing body which includes an elastomeric material, for example vulcanized rubber, and which is adapted to be compressed in the space while being forced against the sealing surfaces, the sealing device according to the invention being characterized in that the sealing body comprises a soft material which is adapted after the compression of the sealing device in the space to engage the elastomeric material and to be forced thereby against the rough surface while filling out the pores, holes and cavities of the surface.

Thereby, the soft material can suitably have the form of at least one layer supported by the elastomeric material and having a thickness of between one and two millimeters. Thereby, it is also possible to arrange the soft material in a cavity formed in the elastomeric material, the elastomeric material engaging the rough surface around the cavity after the compression of the sealing device in the space and enclosing together with the rough surface the soft material positioned in the cavity. As a consequence of this enclosure of the soft material there is provided an efficient pressing of the soft material against the rough surface.

The soft material can be constituted by different kinds of materials, for example a plastic material, soft rubber or cellular rubber or cellular plastic. A suitable plastic material is constituted by unvulcanized rubber. In the case that the soft material is constituted by unvulcanized rubber or another tacky material, it is suitable to provide the soft material with some kind of tack reducer or some kind of covering layer which is removed prior to the establishment of the space between the sealing surfaces.

In an embodiment of the sealing device according to the invention the sealing body consists of a main body and a sliding skin connected therewith, the skin being of the kind which, when the sealing surfaces are displaced substantially parallel with each other for providing the space, is carried along by one of the sealing surfaces while sliding against the main body. Thereby, the soft material can be positioned at least at the side of the sliding skin which is adapted to contact said one sealing surface. It is possible also to position the soft material between the main body and the sliding skin and thereby to use a sliding skin having perforations, so that the soft material is at the compression of the sealing device in the space forced through the perforations to the rough surface for filling out the pores, the holes and the cavities therein.

Some different embodiments of sealing devices according to the invention shall in the following be more closely described with reference to the accompanying drawings.

Fig. 1 is a section of a sealing device in the form of a sealing ring according to the invention.

Fig. 2 is a section of two pipe end portions, one of the pipe end portions supporting a sealing ring according to Fig. 1.

Fig. 3 is a section of the pipe end portions shown in Fig. 2 after the pipe end portions have been connected with each other for forming a pipe joint sealed by means of the sealing ring according to Fig. 1.

Fig. 4 is a section on an enlarged scale showing the connection between a sealing device according to the invention and a sealing surface engaged thereby.

Fig. 5 is a section corresponding to the section of Fig. 1 showing another embodiment of a sealing device formed as a sealing ring according to the invention.

Fig. 6 is a section of a pipe joint sealed by means of a sealing ring of the kind shown in Fig. 5.

Figs. 7 and 8 show sections corresponding to Fig. 5 of sealing devices according to the invention formed as sealing rings, the sealing rings being somewhat modified in relation to the sealing ring according to Fig. 5.

Fig. 9 as a section corresponding to Fig. 1 of a further embodiment of a sealing device according to the invention in the form of a sealing ring.

Fig. 10 is a section of a pipe joint sealed by means of a sealing ring according to Fig. 9.

Fig. 11 is a section of a sealing device according to the invention corresponding to Fig. 9 and formed as a sealing ring, the sealing ring being somewhat modified in relation to the sealing ring according to Fig. 9.

Fig. 12 is a further embodiment of a sealing device according to the invention formed as a sealing ring, corresponding to the section of Fig. 1.

Fig. 13 is a section of a pipe joint sealed by means of the sealing ring of the kind shown in Fig. 12.

Fig. 14 is a section of a further embodiment of a sealing device according to the invention in the form of a sealing ring.

Fig. 15 is a section of a pipe joint sealed by means of a sealing ring according to Fig. 14.

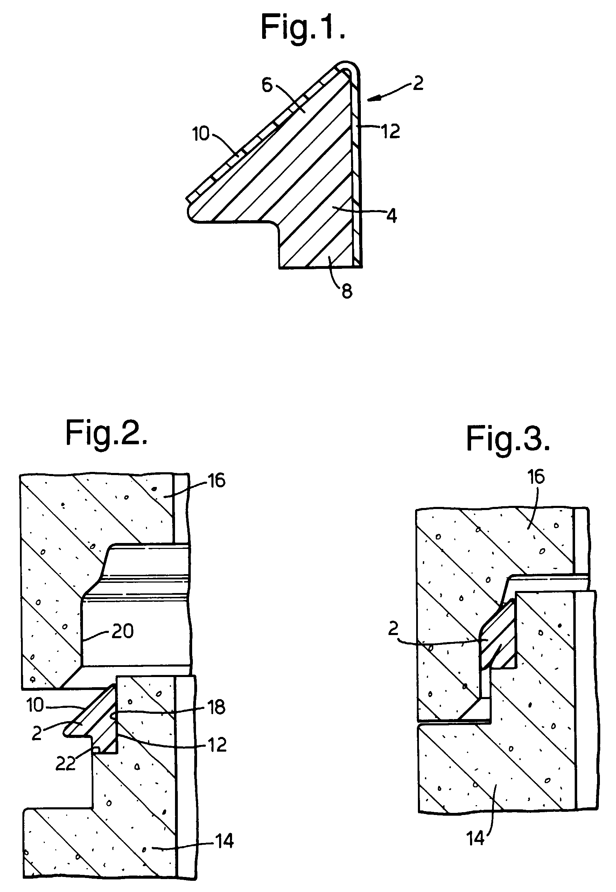

Fig. 1 shows a section of a portion of a sealing device according to the invention, constituted by a sealing ring 2. The sealing ring has a sealing body 4 consisting of elastomeric material, for example vulcanized rubber having a hardness of 40 IRHD. The sealing body 4 consists of a triangular sealing portion 6 and a support portion 8.

At its peripherally outer surface and at its peripherally inner surface the sealing ring 2 has layers 10 and 12, respectively, of a soft material. Suitably the layers 10 and 12 of soft material have a thickness of between 1 and 2 millimeters and can consist of plastic material, for example unvulcanized rubber, soft rubber having a hardness of 10 - 20 IRHD or cellular rubber or cellular plastic having an air contents of 50 - 95%.

If the soft material is tacky which is often the case when the material is a plastic material, such as unvulcanized rubber, it can be suitable to provide the outer surface of the soft material with a tack reducer, not shown, or with any kind of covering layer, for example tape which is removed when the sealing ring shall be used for sealing a joint.

The sealing ring according to Fig. 1 is intended to be used for sealing a pipe joint in accordance with the method shown in Figs. 2 and 3.

The pipe joint is intended to be established between the end portions of two concrete pipes, one end portion forming a spigot end 14 and the other constituting a socket 16. The spigot end 14 and the socket 16 are intended to be connected with each other for forming a space which is defined by a substantially cylindrical sealing surface 18 of the spigot end and a similar substantially cylindrical sealing surface 20 of the socket. The sealing surfaces 18 and 20 are constituted by the concrete material of the spigot end 14 and the socket 16 and constitute relatively rough surfaces having pores, holes and cavities. The sealing ring 2 is intended to engage the sealing surfaces 18 and 20 by means of its layers 10 and 12 consisting of soft material for filling out the pores, holes and cavities of the sealing surfaces 18 and 20 in order to provide a tight joint in spite of the rough structure of the sealing surfaces.

The sealing ring 2 is tensioned onto the spigot end 14 in the position shown in Fig. 2, in which the layer 12 of soft material contacts the sealing surface 18 and the support portion 8 engages a radially extending shoulder 22 on the spigot end 14. The joint between the spigot end 14 and the socket 16 is provided by axially putting the socket 16 and the spigot end 14 together to the position shown in Fig. 3 in which the sealing surfaces 18 and 20 form a space in which the sealing ring is radially compressed. The radial compression of the sealing ring 2 in the space provides that the layers 10 and 12 of soft material are forced against the sealing surfaces 18 and 20 in such a way that the soft material fills the pores, holes and cavities of the sealing surfaces 18 and 20 so that there is provided a secure sealing of the space.

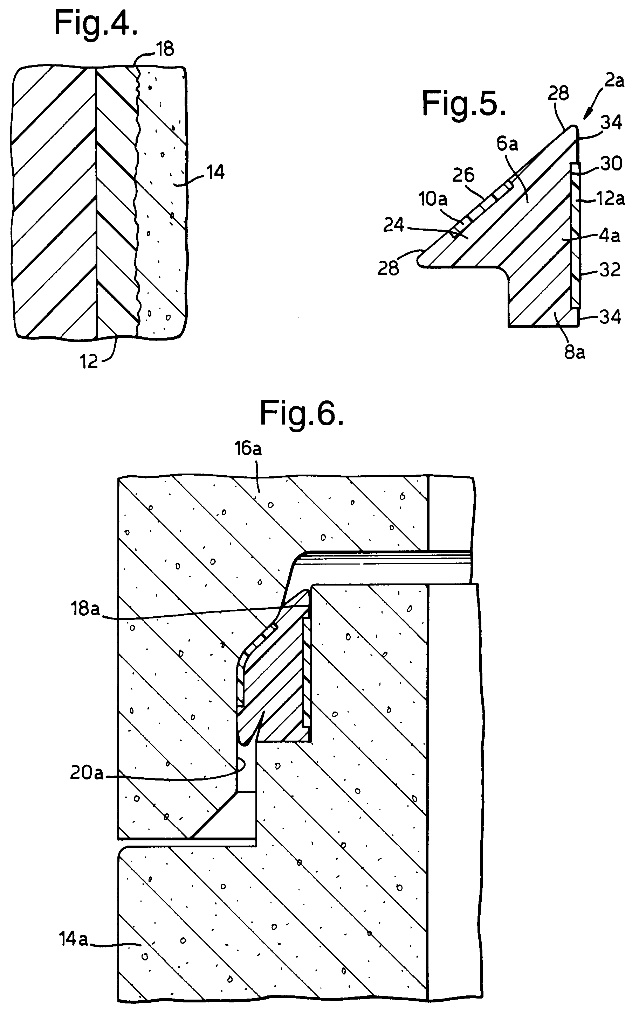

In Fig. 4 there is shown on an enlarged scale the connection between the soft material layer 12 of the sealing ring 2 and the sealing surface 18 of the spigot end 14. As appears from Fig. 4, the soft material of the layer 12 fills in an efficient way the pores, holes and cavities of the sealing surface 18 in such a way that a completely tight joint is obtained.

In Fig. 5 there is shown a somewhat modified embodiment of the sealing ring according to the invention. Like the sealing ring 2 according to Fig. 1 the sealing ring 2a according to Fig. 5 consists of a sealing body 4a of elastic material having a sealing portion 6a and a support portion 8a. The sealing ring 2a has at its outer periphery a layer 10a of soft material which is positioned in a recess 24 in the sealing portion 6a in such a way, that the outer surface 26 of the layer 10a is in substantially the same plane as surface portions 28 formed by the elastic material of the main body 4a at opposite sides of the layer 10a of the soft material.

The layer 12a of soft material is at the inner periphery of the sealing ring in a corresponding way positioned in a recess 30 in the elastic material main body 4a so that the outer surface 32 of the layer 12a of soft material is situated in substantially the same plane as the surface portions 34 of the elastic material of the main body 4a at opposite sides of the soft material layer.

When the sealing ring 2a has been compressed in the space between the sealing surfaces 18a and 20a on the spigot end 14a and the socket 16a, respectively, as shown in Fig. 6, the layers 10a and 12a of soft material are enclosed by the elastic material of the main body 4a and the sealing surfaces 18a and 20a which provides that the soft material of the layers 10a and 12a is at a high pressure forced against the sealing surfaces 18a and 20a. Thereby, the soft material is with additional security forced against the sealing surfaces for filling out the pores, holes and cavities of the rough sealing surfaces.

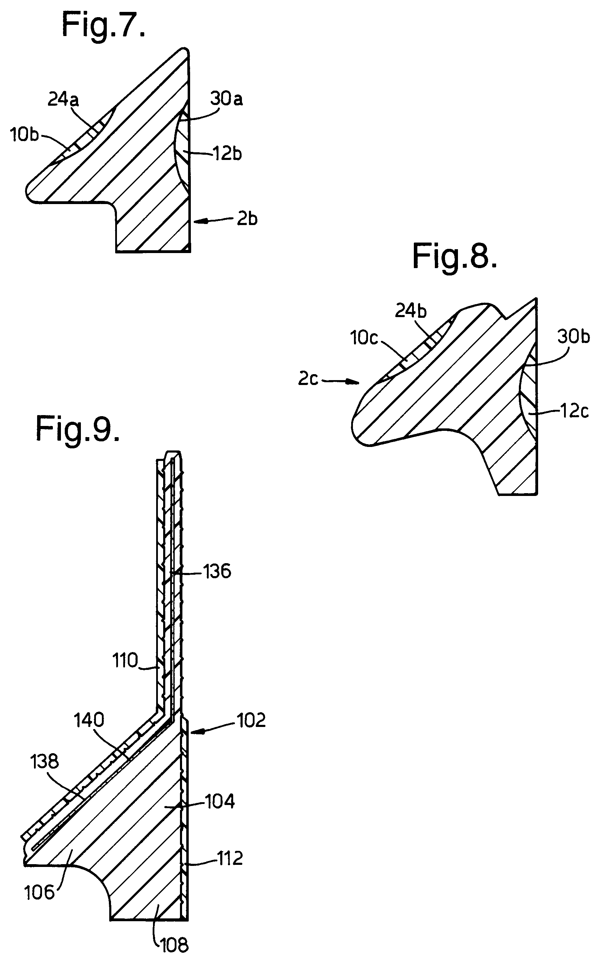

In Figs. 7 and 8 there is shown somewhat modified embodiments of sealing rings 2b and 2c of the type shown in Fig. 5. The sealing ring 2b according to Fig. 7 has the same outer design as the sealing ring according to Fig. 5 and differs from this sealing ring with regard to the design of the recesses 24a and 30a in which the soft material 10b and 12b is positioned. Thus, the recesses 24a and 30a are formed with a concave bottom giving the recesses a section formed as a segment of a circle. The sealing ring 2c according to Fig. 8 has the same design of the recesses 24b and 30b and the soft material 10c and 12c positioned therein as in the sealing ring 2b according to Fig. 7. However, the sealing ring 2c has a different outer design than the sealing rings 2a and 2b according to Figs. 5 and 7 which indicates that the basic principle of the invention can be used in different types of sealing rings.

The sealing rings 2b and 2c according to Figs. 7 and 8 are adapted to be used in the same way as the sealing ring 2a according to Fig. 5, i.e. as shown in Fig. 6.

The embodiment of the sealing device according to the invention shown in Fig. 9 is constituted by a sealing ring 102 having a main body 104 of elastomeric material. The sealing body 104 has a sealing portion 106 and a support portion 108. In addition thereto the sealing ring 102 comprises a sliding skin 136 which at its edge portions is connected with the main body 104. Thus, the sliding skin 106 is formed in one part with and consists of the same material as the main body 104.

At its outer surface the sliding skin 136 has a layer 110 of soft material, and the main body 104 has at its inner periphery a layer 112 of a likewise soft material. As in the embodiments of the sealing device according to the invention previously described, the layers 110 and 112 can consist of a plastic material, for example unvulcanized rubber, soft rubber having a hardness of 10 - 20 IRHD or cellular rubber or cellular plastic having an air contents of 50 - 95%.

Preferably, a lubricant is positioned in the pocket 140 formed by the sliding skin 136 and the surface 138 of the main body 104. As in the embodiments of the sealing device according to the invention described above the sealing ring 102 is tensioned onto a sealing surface 118 on a spigot end 114 of a concrete pipe. The spigot end 114 is thereupon connected with a socket 116 of another concrete pipe by connecting the socket 116 and the spigot end 114 in an axial direction while a sealing surface 120 on the socket 116 engages the sliding skin 136 of the sealing ring. During the axial connection of the socket 116 with the spigot end 114 the sliding skin 136 slides against the surface 138 on the main body 104 which facilitates the connection movement.

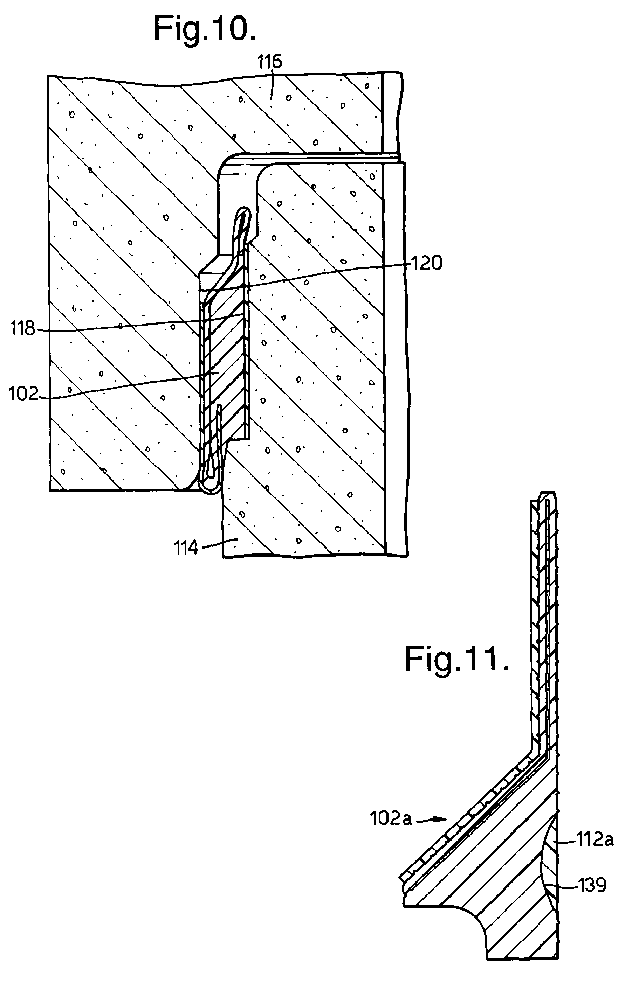

After the connection movement has been completed the spigot end 114 and the socket 116 take the position shown in Fig. 10 in which the sealing surfaces 118 and 120 form a space in which the sealing ring 102 is compressed. The layers 110 and 112 of soft material are in a sealant way forced against the sealing surfaces 120 and 118 by the fact that the soft material fills out the pores, holes and cavities of the rough sealing surfaces.

In Fig. 11 there is shown a modification of the sealing ring 102 according to Fig. 9. The sealing ring 102a according to Fig. 11 is of the same outer design as the sealing ring 102 according to Fig. 9 while the sealing ring 102a instead of having an outer layer 112 of soft material has the soft material 112a positioned in a recess 139 of the same design as the recesses 24a and 30a and 24b and 30b in the embodiments according to Figs. 7 and 8.

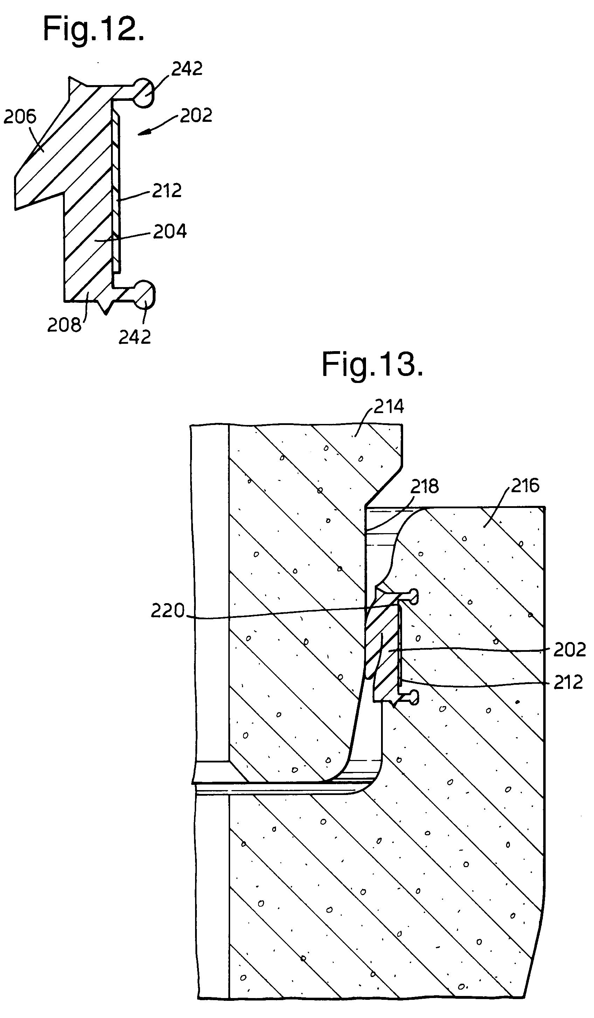

The embodiment of the sealing device according to the invention shown in section in Fig. 12 is constituted by a sealing ring 202 intented to be moulded into a concrete pipe socket. The sealing ring 202 has a sealing body 204 consisting of elastomeric material, for example vulcanized rubber, and comprising a sealing portion 206, a support portion 208 and retainer portions 242. The retainer portions 242 have the object of retaining the sealing ring 202 in the position in which the sealing ring is moulded into the concrete material.

The sealing ring 202 has a layer 212 intended to contact the sealing surface of the socket in the moulded-in position of the sealing ring, the layer 212 consisting of soft material of the same kind as the soft material of the embodiments of the sealing devices described above.

Fig. 13 shows the sealing ring 202 moulded into a concrete pipe socket 216 which together with a spigot end 214 forms a sealing space. The space is defined by sealing surfaces 218 and 220, and the sealing ring 202 is consequently compressed between these sealing surfaces 218 and 220. In the embodiment of the sealing ring according to the invention shown in Figs. 12 and 13 only the surface of the sealing ring 202, which contacts the sealing surface 220 is provided with a layer of soft material. Thus, the sealing ring 202 directly engages the sealing surface 218 by means of the elastomeric material sealing portion 206 of the main body 204 of the sealing ring 202.

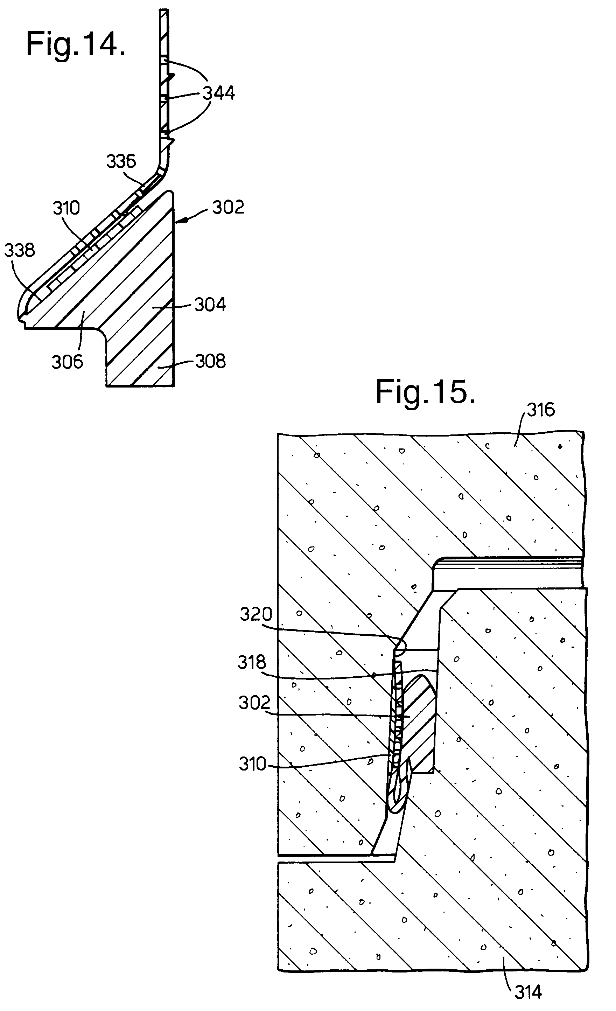

The embodiment of the sealing device according to the invention shown in Fig. 14 is constituted by a sealing ring 302 which consists of a main body 304, consisting of elastomeric material and a sliding skin 336 likewise consisting of elastomeric material and connected with the main body 304 at its lower edge. The main body 304 of the sealing ring 302 consists of a sealing portion 306 and a support portion 308. At its outer surface 338 the sealing portion 306 has a thin layer 310 of soft material of the same kind as the soft material of the embodiments of the sealing device according to the invention described above. Thus, the soft material layer 310 is positioned between the surface 338 of the sealing portion 306 and the sliding skin 336.

The sliding skin 336 is formed with perforations 344 which allow that the soft material of the layer 310 is at the compression of the sealing ring 302 displaced through the sliding skin 336 to the outer surface of the sliding skin for being forced against a rough surface and for filling out the pores, holes and cavities of the rough surface.

Fig. 15 shows the sealing ring 302 positioned in a compressed condition in a joint between a spigot end 314 of a concrete pipe and a socket 316 of a further concrete pipe connected with the first mentioned concrete pipe. The spigot end 314 forms a sealing surface 318, and the socket 316 forms a sealing surface 320, said sealing surfaces defining the space in which the sealing ring 302 is compressed. When the socket 316 and the spigot end 314 are axially connected with each other the sliding skin 336 slides against the sealing body 304, and when the sealing ring 302 is thereby subjected to a compression the soft material of the layer 310 will be forced through the perforations 344 to the outer surface of the sliding skin 336. The soft material will here penetrate the pores, holes, cavities and other irregularities of the sealing surface 320 in order to provide a reliable sealing of the pipe joint.

The invention can be modified within the scope of the following claims.

## Claims

1. A sealing device for sealing a space between two sealing surfaces (18, 20; 18a; 118, 120; 218; 220; 318, 320), at least one of the sealing surfaces being constituted by a rough surface having pores, holes and cavities, for example a concrete surface, the sealing device comprising a sealing body (4, 4a; 104; 204; 304) including an elastomeric material, for example vulcanized rubber, and adapted to be compressed in the space while being forced against the sealing surfaces, **characterized** in that the sealing body comprises a soft material (10, 12; 10a, 12a; 110, 112; 212; 310) which is adapted subsequently to the compression of the sealing device in the space to engage and to be forced against the rough surface while filling out the pores, holes and cavities of the surface.

2. A sealing device as claimed in claim 1, **characterized** in that the soft material is constituted by at least one layer (10, 12; 10a, 12a; 110, 112; 212; 310) supported by the elastomeric material.

3. A sealing device as claimed in claim 2, **characterized** in that the soft layer (10, 12; 10a, 12a; 110, 112; 212; 310) has a thickness of between one and two millimeters.

4. A sealing device as claimed in any of the preceding claims, **characterized** in that the soft material (10, 12a) is positioned in a cavity (24, 30) formed in the elastomeric material and that the elastomeric material subsequently to compression of the sealing device in the space contacts the rough surface around the cavity and together with the rough surface encloses the soft material positioned in the cavity.

5. A sealing device as claimed in claim 4, **characterized** in that the section of the cavity is formed as a segment of a circle.

6. A sealing device as claimed in any of the preceding claims, **characterized** in that the soft material (10, 12; 10a, 12a; 110, 112) is adapted subsequently to the compression of the sealing device in the space to engage both sealing surfaces (18, 20; 18a, 20a; 118, 120) of the space.

7. A sealing device as claimed in any of the preceding claims, **characterized** in that the sealing body (104; 304) consists of a main body and a sliding skin (136; 336) connected therewith and being of a kind which at the displacement of the sealing surfaces substantially parallel with each other for forming the space is brought about by one of the sealing surfaces (120; 320) while sliding against the main body.

8. A sealing device as claimed in claim 7, **characterized** in that the soft material (110) is applied to at least the side of the sliding skin, which engages said one sealing surface (120).

9. A sealing device as claimed in claim 8, **characterized** in that the soft material (112) is applied also to a side of the main body of the sealing device adapted to engage the other sealing surface (118).

10. A sealing device as claimed in claim 7, **characterized** in that the soft material (310) is applied between the main body and the sliding skin (336), that the sliding skin is formed with perforations (344) and that the soft material is adapted at the compression of the sealing device in the space to be forced through the perforations to the rough surface (320) in order to fill out the pores, holes and cavities therein.

11. A sealing device as claimed in claim 1, **characterized** in that the device is adapted to be moulded into concrete and that the soft material (212) is positioned at a surface of the sealing body (204) intended to be moulded into the concrete.

12. A sealing device as claimed in any of the preceding claims, **characterized** in that the soft material (10, 12; 10a, 12a; 110, 112; 212; 310) is constituted by plastic material.

13. A sealing device as claimed in claim 12, **characterized** in that plastic material is constituted by unvulcanized rubber.

14. A sealing device as claimed in any of claims 1 - 11, **characterized** in that the soft material (10, 12; 10a, 12a; 110, 112; 212; 310) is constituted by soft rubber.

15. A sealing device as claimed in claim 14, **characterized** in that the soft rubber has a hardness of 10 - 20 IRHD.

16. A sealing device as claimed in any of claims 1 - 11, **characterized** in that the soft material (10, 12; 10a, 12a; 110, 112; 212; 310) is constituted by cellular rubber or cellular plastic.

17. A sealing device as claimed in claim 16, **characterized** in that the cellular rubber or the cellular plastic has an air contents of 50 - 95%.
